# EUROPEAN PATENT SPECIFICATION

(11) **EP 4 333 186 B1**
(45) Date of publication and mention of the grant of the patent: **20.05.2026**
(21) Application number: 22916528.7
(22) Date of filing: 08.12.2022
(51) Int. Cl.: H01M 50/383, H01M 50/70, H01M 50/204, A62C 3/16

(54) **BATTERY PACK INCLUDING FIRE EXTINGUISHING WATER STORAGE TANK**
BATTERIEPACK MIT FEUERLÖSCHWASSERSPEICHERTANK
BLOC-BATTERIE COMPRENANT UN RÉSERVOIR DE STOCKAGE D'EAU D'EXTINCTION D'INCENDIE

(30) Priority: 28.12.2021 KR 20210189424
(43) Date of publication of application: 06.03.2024
(73) Proprietor: LG Energy Solution, Ltd., Seoul 07335 (KR)
(72) Inventor: LEE, Jae-Ki, Daejeon 34122 (KR); KIM, Ki-Youn, Daejeon 34122 (KR); KIM, Hyeon-Kyu, Daejeon 34122 (KR); MUN, Jeong-O, Daejeon 34122 (KR); PARK, Gi-Dong, Daejeon 34122 (KR); AHN, Jong-Kyu, Daejeon 34122 (KR); YUN, Young-Won, Daejeon 34122 (KR); LEE, Seong-Ju, Daejeon 34122 (KR)
(74) Representative: Plasseraud IP
(86) International application number: PCT/KR2022/019983
(87) International publication number: WO 2023/128382

(56) References cited:
- WO-A1-2021/172785
- WO-A1-2021/187806
- CN-A- 110 772 732
- CN-U- 214 848 912
- JP-B2- 5 760 713
- KR-A- 20200 118 280
- KR-A- 20210 112 163
- US-A1- 2011 005 781

## Description

### TECHNICAL FIELD

The present disclosure relates to a battery, and more particularly, to a battery pack configured to suppress a fire by injecting fire extinguishing water when a thermal event occurs and prevent leakage of contaminated fire extinguishing water after fire suppression.

### BACKGROUND ART

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Secondary batteries have been widely used not only in small devices such as portable electronic devices but also in medium and large-sized devices such as electric vehicles and energy storage systems (ESSs), and their use has rapidly increased. Moreover, recently, the use of residential battery packs for storing power has gradually increased.

Various battery packs including residential battery packs include a plurality of battery cells (secondary batteries) to increase a capacity and/or output. In particular, a plurality of battery cells are often densely arranged in a very narrow space to increase energy density of a battery pack.

Safety is one of most important issues in such a battery pack configuration. In particular, when a thermal event occurs in any one of a plurality of battery cells included in a battery pack, it is necessary to suppress the thermal event from being easily propagated to other battery cells. For example, high-temperature venting gas may be ejected from a battery cell in which thermal runaway or the like occurs, and the venting gas may affect other battery cells, thereby amplifying thermal propagation. When thermal propagation between the battery cells is not appropriately suppressed, a serious problem such as ignition or explosion of the battery pack may be caused. Furthermore, the ignition or explosion of the battery pack may cause great damage to surrounding people or property. In particular, when a fire or explosion occurs in a battery pack for a house, the safety of people living in the house may be damaged and a house fire may be caused, thereby resulting in greater damage.

In order to solve such a problem, research has recently been conducted to apply a so-called water injection type fire extinguishing system, which suppresses a fire by injecting cooling water into a battery pack, to a battery pack.

In a water injection type fire extinguishing system, cooling water may be mixed with harmful substances during a fire extinguishing process to become contaminated water, and as this contaminated water is discharged out of a battery pack, new problems such as environmental pollution may be caused. For example, in the case of a battery pack for a house, cooling water used to suppress a fire in the battery pack may be mixed with harmful substances in the battery pack, may be discharged out of the battery pack, and then may enter a sewage system of the house. Accordingly, there is a need for a method of preventing contaminated water from a battery pack from flowing into a sewage system of a house.

Document KR 2020/0118280 A discloses an energy storage system comprising a fire suppression system.

### DISCLOSURE

### Technical Problem

The present disclosure is designed to solve the problems of the related art, and therefore the present disclosure is directed to providing a battery pack to which a fire extinguishing tank is applied to rapidly control a thermal event occurring in the battery pack.

Also, the present disclosure is directed to providing a battery pack configured to temporarily store a fire extinguishing liquid contaminated after being injected to extinguish a fire of the battery pack in case of a thermal event so as not to be discharged out of the battery pack and contaminate a surrounding environment.

### Technical Solution

To this end, the invention relates to a battery pack according to claim 1.

The battery pack after the invention may present one or more features form dependent claims 2 to 13, in any combination allowed by the claims.
The invention also relates to an energy storage system according to claim 14.

### Advantageous Effects

According to the present disclosure, a battery pack with improved safety may be provided.

In particular, according to an embodiment of the present disclosure, even when a thermal event occurs in a battery pack, the thermal event may be rapidly controlled.

Also, according to the present disclosure, because a fire extinguishing liquid contaminated after being injected due to a thermal event may be stored in a contaminated water storage container, contaminated water may be prevented from entering a sewage system or the like.

Also, when venting gas or the like is generated in a battery cell from among a plurality of battery cells included in a battery pack, a temperature of the battery cell may be rapidly lowered by injecting a fire extinguishing liquid.

Accordingly, according to this aspect of the present disclosure, propagation of thermal runaway or a fire to other battery cells due to heat or venting gas may be effectively prevented.

Also, according to an aspect of the present disclosure, venting gas may be prevented from being transferred from a battery sub-module in which a thermal event occurs to a battery sub-module in which a thermal event does not occur, and a fire extinguishing agent may be supplied only to the battery sub-module in which the thermal event occurs because a glass bulb (of a fire extinguishing tank) corresponding to the side in which the thermal event occurs is broken.

Accordingly, according to this aspect of the present disclosure, a fire of the battery sub-module in which the thermal event occurs from among a plurality of battery modules may be intensively and effectively suppressed.

Also, according to this aspect of the present disclosure, because the battery sub-module in which a thermal event does not occur may be continuously used, efficiency may be improved.

In addition, various other additional effects may be achieved by various embodiments of the present disclosure. The present disclosure may have various other effects, which will be described in detail in each embodiment, or descriptions of effects that may be easily inferred by one of ordinary skill in the art will be omitted.

### DESCRIPTION OF DRAWINGS

FIG. 1 is a perspective view schematically illustrating a configuration of a battery pack, according to an embodiment of the present disclosure.
FIG. 2 is an exploded perspective view illustrating main portions of the battery pack of FIG. 1.
FIG. 3 is an exploded perspective view illustrating main portions of a battery module of FIG. 2.
FIG. 4 is a perspective view illustrating lower portions of first and second battery sub-modules after a module connect bottom cover is separated from the battery module of FIG. 2.
FIG. 5 is a cut-away perspective view illustrating a lower end portion of a battery module, according to an embodiment of the present disclosure.
FIG. 6 is a perspective view schematically illustrating a configuration of a module supporter unit, according to an embodiment of the present disclosure.
FIG. 7 is a view illustrating a standing bracket of FIG. 6 and a portion of a battery module seated on the standing bracket.
FIG. 8 is a cut-away perspective view illustrating the battery pack of FIG. 1.
FIG. 9 is an enlarged view illustrating a portion A of FIG. 8.
FIG. 10 is a view illustrating a modified example of the module supporter unit, corresponding to FIG. 6.
FIG. 11 is a partial cut-away view illustrating the module supporter unit and a battery module of FIG. 10, corresponding to FIG. 9.
FIG. 12 is a perspective view schematically illustrating a lower portion of a fire extinguishing tank unit, according to an embodiment of the present disclosure.
FIG. 13 is a partial cut-away view schematically illustrating a configuration in which a fire extinguishing liquid may be injected into first and second battery sub-modules by a fire extinguishing tank unit, according to an embodiment of the present disclosure.
FIG. 14 is a schematic bottom perspective view illustrating a control module of FIG. 2.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

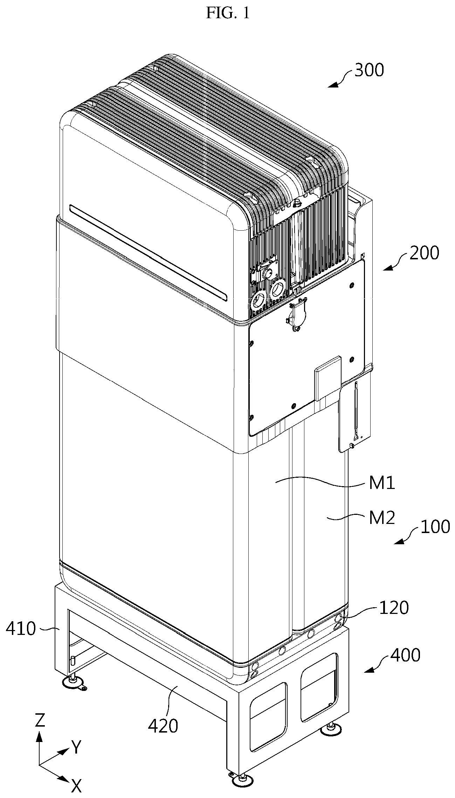

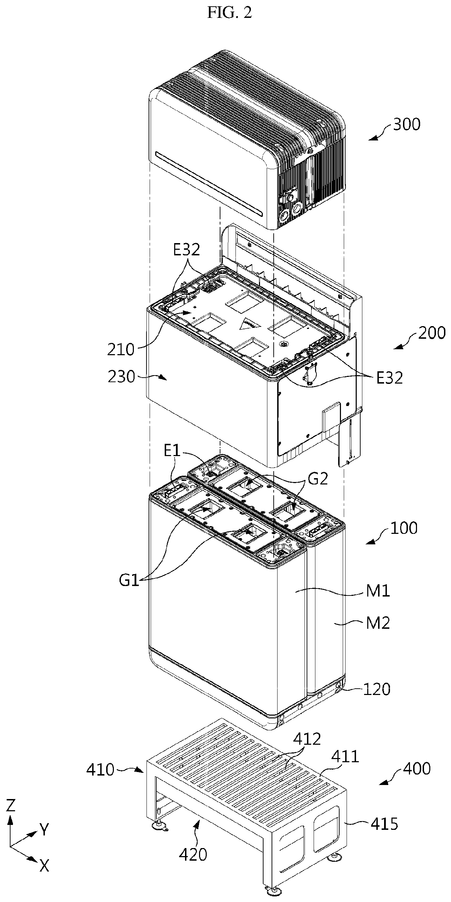

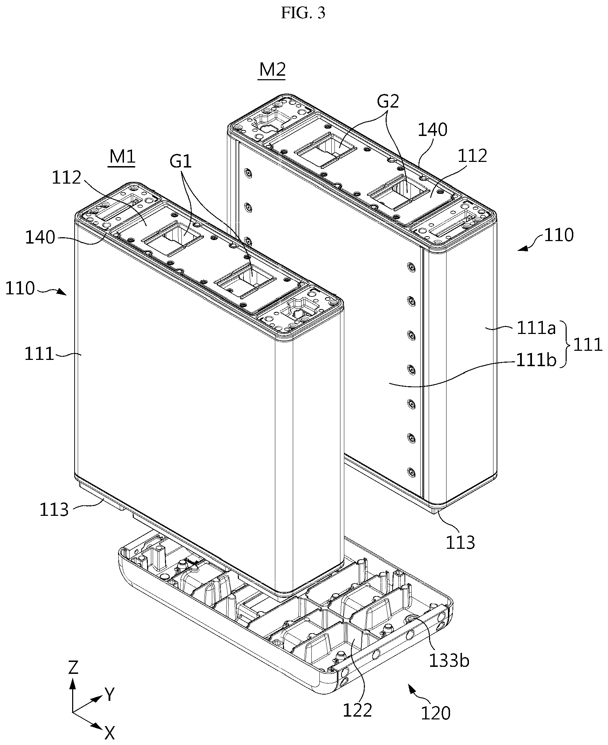

FIG. 1 is a perspective view schematically illustrating a configuration of a battery pack, according to an embodiment of the present disclosure. FIG. 2 is an exploded perspective view illustrating main portions of the battery pack of FIG. 1. FIG. 3 is an exploded perspective view illustrating main portions of a battery module of FIG. 2.

Referring to FIGS. 1 and 2, a battery pack according to an embodiment of the present disclosure includes a battery module 100, a fire extinguishing tank unit 200, a control module 300, and a module supporter unit 400.

The battery module 100 may include battery cells. Each battery cell may refer to a secondary battery. The secondary battery may include an electrode assembly, an electrolyte, and a battery case. The secondary battery may be manufactured as a pouch-type secondary battery, a cylindrical secondary battery, or a prismatic battery according to an outer shape.

Also, the battery module 100 may include battery cells and a module case for accommodating the battery cells. In particular, the module case may have an empty inner space in which a plurality of battery cells may be accommodated. The module case may include water injection holes G1, G2 formed by making at least a part of an upper end portion of the module case open. Also, the module case may be configured to allow a fire extinguishing liquid to move from the water injection holes G1, G2 to the inner space in which the battery cells are located.

In particular, the battery module 100 according to the invnention includes a first battery sub-module M1 and a second battery sub-module M2.

Each of the first battery sub-module M1 and the second battery sub-module M2 accommodates battery cells therein, and thus, may function as an energy storage device.

For example, even when any one of the first and second battery sub-modules M1, M2 is inoperable, the other one may operate, thereby improving operational efficiency. Also, when the battery module 100 is configured as described above, simply the battery sub-module that is inoperable needs to be replaced or partially separated and repaired. In addition, because battery cells are divided and accommodated in the first battery sub-module M1 and the second battery sub-module M2, for example, when a thermal event occurs in the battery cells accommodated in the first battery sub-module M1, propagation of thermal energy to the battery cells accommodated in the second battery sub-module M2 may be suppressed. Moreover, as described below in detail, because a fire extinguishing liquid is supplied to the first battery sub-module M1 and is not supplied to the second battery sub-module M2 in the above situation, the second battery sub-module M2 in which a thermal event does not occur may be continuously used.

Although the battery module 100 includes two battery sub-modules M1, M2 in the present embodiment, unlike in the present embodiment, the battery module 100 may include three, or four or more battery sub-modules.

Each of the first battery sub-module M1 and the second battery sub-module M2 includes a module case. The module case may include a middle case 111, a top plate 112, and a bottom plate 113, as shown in FIG. 3.

The middle case 111 may have a hollow structure to have an inner space in which battery cells may be accommodated. For example, the middle case 111 may include a case body 111a with one side surface open, and a cover plate 111b covering an open portion of the case body 111 and being separable from the case body by disengaging a bolt or snap-fitted portion of the case body 111a. Because the cover plate 111b may be separated from the case body 111a, the middle case 111 may easily accommodate, for example, battery cells or other electronic components.

The top plate 112 is coupled to an open portion of an upper end of the middle case 111 to form an upper end of each battery sub-module. The top plate 112 includes the water injection holes G1, G2. The water injection holes G1, G2 are elements for supplying a fire extinguishing liquid of the fire extinguishing tank unit 200 into the module case when a thermal event occurs. Although two water injection holes G1, G2 are provided in the top plate 112 in the present embodiment, one, or three or more water injection holes G1, G2 may be formed.

Also, as shown in FIG. 2, the water injection holes G1, G2 are respectively provided in the first battery sub-module M1 and the second battery sub-module M2. Accordingly, the first battery sub-module M1 and the second battery sub-module M2 may individually receive a fire extinguishing liquid from the fire extinguishing tank unit 200 respectively through the water injection holes G1, G2. As described below in detail, according to the configuration, for example, when an event occurs only in the first battery sub-module M1 from among the first and second battery sub-modules M1, M2, a fire of the first battery sub-module M1 may be intensively and effectively suppressed. Also, the second battery sub-module M2 in which an event does not occur may be continuously used.

The top plate 112 may include a sealing member 140 extending along an edge of the top plate, as shown in FIG. 3. The sealing member 140 may be formed of, for example, silicone or a material having excellent heat resistance. The sealing member 140 may protrude upward from a surface of the top plate 112. When the fire extinguishing tank unit 200 is seated on the top plate 112, the sealing member 140 may contact a bottom surface of the fire extinguishing tank unit 200 to seal an upper portion of the top plate 112. For example, when venting gas is generated in a battery cell, even though the venting gas is discharged upward from the top plate 112 through the water injection holes G1, G2, the venting gas may not leak out of the edge of the top plate 112 because the edge of the top plate 112 is sealed as described above.

In particular, each of the first battery sub-module M1 and the second battery sub-module M2 includes the sealing member 140 on the top plate 112. Accordingly, venting gas discharged upward from the top plate 112 through the water injection hole G1 of the first battery sub-module M1 may be blocked by the sealing member 140 extending along the edge from moving to the water injection hole G2 of the second battery sub-module M2.

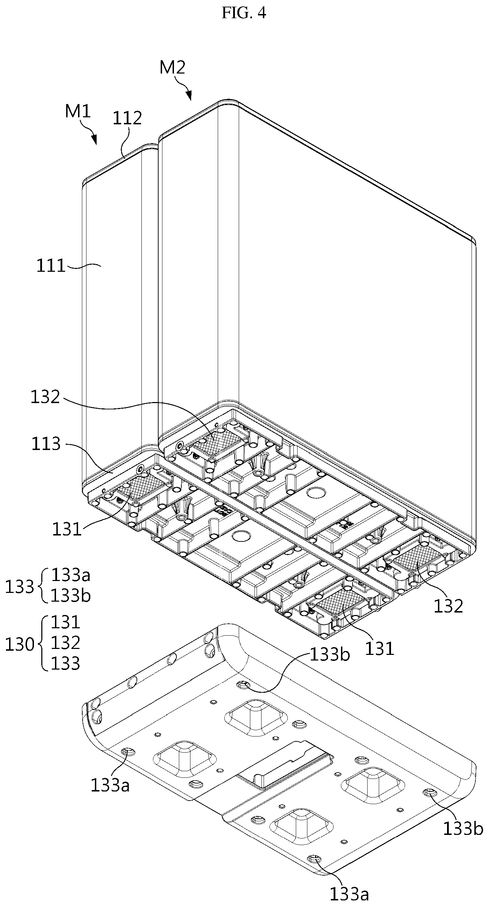

As shown in FIG. 3, the bottom plate 113 is coupled to a lower end of the middle case 111, to form a bottom surface of each battery sub-module. Also, the bottom plate 113 may include a drain hole 130, as shown in FIG. 4. The drain hole 130 of the bottom plate 113 is a part of a plurality of drain holes 130 provided in the battery module 100.

The battery module 100 according to an embodiment of the present disclosure may include the plurality of drain holes 130. For example, as shown in FIG. 4, the drain hole 130 includes a first drain hole 131 formed in a bottom surface of the first battery sub-module M1 and a second drain hole 132 formed in a bottom surface of the second battery sub-module M2.

Also, one or more first drain holes 131 and second drain holes 132 may be provided, and preferably, may be covered by a mesh filter. The mesh filter may suppress leakage of a flame or particles (an electrode plate or an active material piece detached when a battery cell is fired). Also, the mesh filter has a slight watertightness to delay leakage of a fire extinguishing liquid so that the fire extinguishing liquid stays in the module case for a certain period of time.

Because the battery module 100 includes the drain hole 130, when a fire extinguishing liquid is injected into the first and second battery sub-modules M1, M2, the fire extinguishing liquid may be used to suppress a fire and then may be discharged downward from the module case through the first drain hole 131 or the second drain hole 132. In addition, when venting gas is generated in battery cells, the venting gas may be discharged downward from the battery module 100 through the first drain hole 131 or the second drain hole 132. Accordingly, when an event occurs, internal pressure of the battery module 100 may not be rapidly increased. Hence, according to the embodiment, when a thermal event occurs, collapse or explosion of the battery module 100 due to an increase in pressure may be suppressed.

The battery module 100 according to an embodiment of the present disclosure may further include a module connect bottom cover 120, as shown in FIGS. 2 to 4.

As shown in FIG. 3, the battery module 100 may include three components including the first battery sub-module M1, the second battery sub-module M2, and the module connect bottom cover 120, and the three components may be assembled as shown in FIG. 2. For example, in the battery module 100, the first battery sub-module M1 and the second battery sub-module M2 may be in close contact with each other while side surfaces of the first and second battery sub-modules M1, M2 face each other, and the first and second battery sub-modules M1, M2 may be fixed at once by coupling the module connect bottom cover 120 to lower portions of the first and second battery sub-modules M1, M2. The module connect bottom cover 120 may be provided to integrally cover the lower portion of the first battery sub-module M1 and the lower portion of the second battery sub-module M2.

According to the module connect bottom cover 120, the first battery sub-module M1 and the second battery sub-module M2 may be stably supported without being separated from each other, and may be easily seated on the module supporter unit 400.

Also, the module connect bottom cover 120 includes the drain hole 130. In other words, as shown in FIG. 4, the drain hole 130 of the battery module 100 according to an embodiment of the present disclosure further includes a third drain hole 133 formed in a bottom surface 120B of the module connect bottom cover 120.

In particular, the third drain hole 133 may include a 3_1^{th} drain hole 133a located at a position corresponding to the bottom surface of the first battery sub-module M1 and a 3_2^{th} drain hole 133b located at a position corresponding to the bottom surface of the second battery sub-module M2, in the bottom surface 120B of the module connect bottom cover 120.

According to the configuration of the third drain hole 133, a fire extinguishing liquid dropping from the first drain hole 131 provided in the bottom surface of the first battery sub-module M1 may be smoothly discharged downward from the module connect bottom cover 120 through the 3_1^{th} drain hole 133a, and a fire extinguishing liquid dropping from the second drain hole 132 provided in the bottom surface of the second battery sub-module M2 may be smoothly discharged downward from the module connect bottom cover 120 through the 3_2^{th} drain hole 133b.

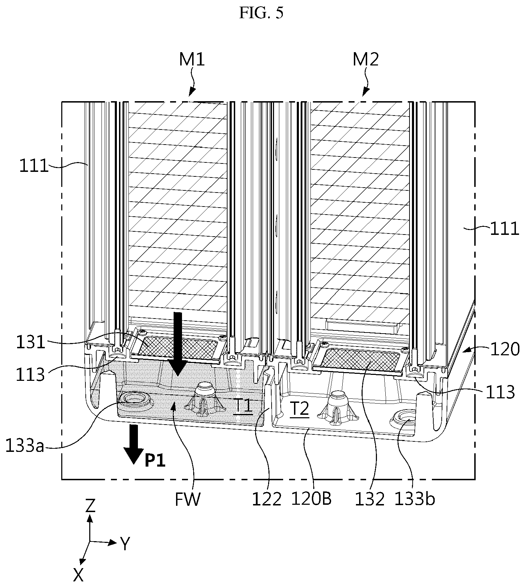

Also, as shown in FIG. 5, the module connect bottom cover 120 according to the present embodiment may include a blocking wall 122 that limits a movement path of a fire extinguishing liquid on the bottom surface of the module connect bottom cover 120, so that a fire extinguishing liquid dropping from the first drain hole 131 flows to the 3_1^{th} drain hole 133a without moving to the 3_2^{th} drain hole 133b and a fire extinguishing liquid dropping from the second drain hole 132 flows to the 3_2^{th} drain hole 133b without moving to the 3_1^{th} drain hole 133a.

In more detail, a buffer space in which a certain amount of fire extinguishing liquid may be collected may be provided between the bottom surfaces of the first and second battery sub-modules M1, M2 and the bottom surface 120B of the module connect bottom cover 120. The buffer space may include a first buffer space T1 and a second buffer space T2 with the blocking wall 122 therebetween. The first drain hole 131 and the 3_1^{th} drain hole 133a may be located at an upper portion and a lower portion of the first buffer space, and the second drain hole 132 and the 3_2^{th} drain hole 133b may be located at an upper portion and a lower portion of the second buffer space.

In this embodiment, for example, when a fire extinguishing liquid is injected into the water injection hole G1 of the first battery sub-module M1, the fire extinguishing liquid may drop to the module connect bottom cover 120 through the first drain hole 131 of the first battery sub-module M1, as marked by an arrow of FIG. 5. In this case, because the movement of the fire extinguishing liquid is limited by the blocking wall 122 in the buffer space, a fire extinguishing liquid FW (see FIG. 5) dropping from the first drain hole 131 is collected in the first buffer space and then is discharged downward from the module connect bottom cover 120 through the 3_1^{th} drain hole 133a. That is, because a fire extinguishing water contaminated after being injected into the first battery sub-module M1 in which an event occurs may be directly discharged downward from the module connect bottom cover 120 through the 3_1^{th} drain hole 133a, the second battery sub-module M2 may not be contaminated. The fire extinguishing liquid discharged downward from the module connect bottom cover 120 may finally drop into a contaminated water storage container 420 of the module supporter unit 400.

The module supporter unit 400 is located under the battery module 100 and supports the battery module 100 so that the battery module 100 is located at a certain height from the ground, as shown in FIG. 1.

In particular, the module supporter unit 400 may be configured to support the battery module 100 to be spaced apart from the ground and accommodate a fire extinguishing liquid dropping from the battery module 100.

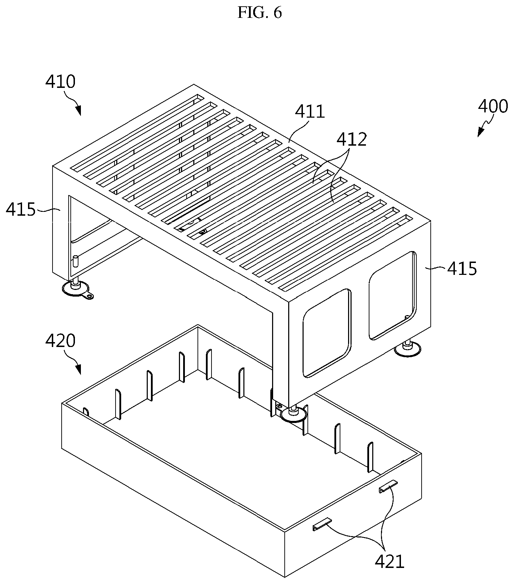

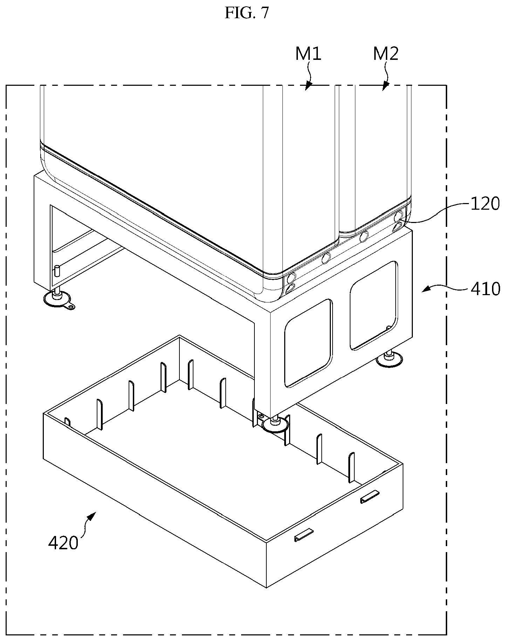

In detail, referring to FIGS. 6 and 7, the module supporter unit 400 according to the present embodiment may include a standing bracket 410 including one or more through-holes 412 communicating with the drain hole 130 of the battery module 100, a shelf portion 411 having a top surface on which the battery module 100 may be seated, and a leg portion 415 supporting the shelf portion 411 to be spaced apart from the ground.

Also, the module supporter unit 400 may include the contaminated water storage container 420 located under the shelf portion 411 to accommodate a fire extinguishing liquid dropping through the through-holes 412. Preferably, the contaminated water storage container 420 may be detachably provided on the standing bracket 410. In this case, a contaminated fire extinguishing liquid may be collected in the contaminated water storage container 420 and then may be easily disposed of in a safe place.

The shelf portion 411 may have, for example, a grating structure to drain water and stably support a lower portion of the battery module 100. The leg portion 415 may have any structure as long as the leg portion 415 may support the shelf portion 411 to be spaced apart from the ground. The standing bracket 410 may be formed of a metal material having high rigidity that may sufficiently withstand a load of the battery module 100.

The contaminated water storage container 420 may be provided in a substantially box shape with an open top, and may be located under the shelf portion 411 to receive a fire extinguishing liquid dropping from the battery module 100. Also, the contaminated water storage container 420 may include locks 421 on both side surfaces, and the standing bracket 410 may include projections (not shown) engaged with or disengaged from the locks 421 on an inner surface thereof. In this configuration, the contaminated water storage container 420 may be hung in the standing bracket 410 so that the contaminated water storage container 420 is located under the shelf portion 411.

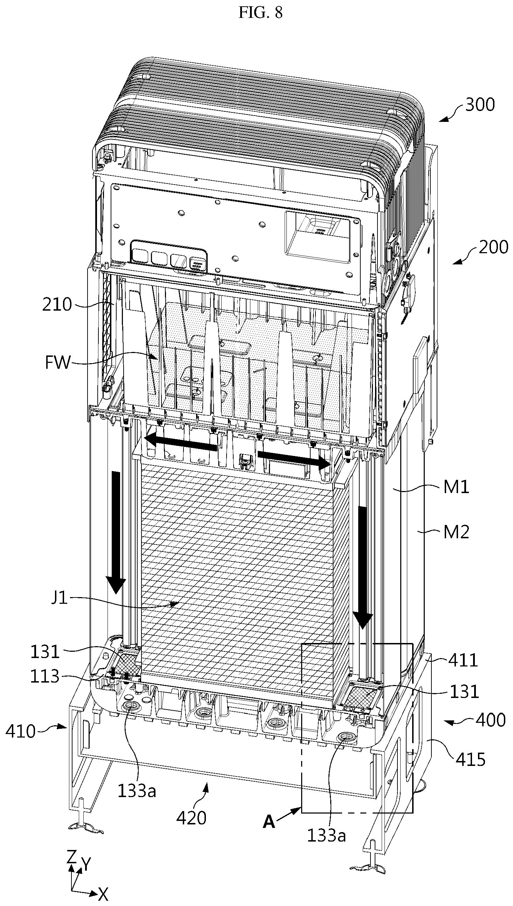

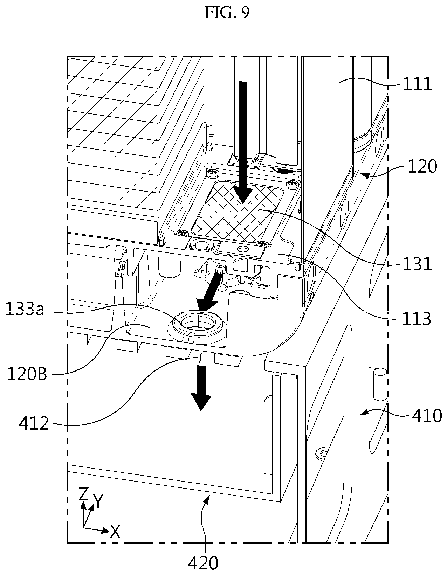

FIG. 8 is a cut-away perspective view illustrating the battery pack of FIG. 1. FIG. 9 is an enlarged view illustrating a portion A of FIG. 8.

Next, a drainage structure of a fire extinguishing liquid injected into a battery module according to an embodiment of the present disclosure will be briefly described with reference to FIGS. 8 and 9.

In FIG. 8, a fire extinguishing liquid FW may be contained in the first extinguishing tank unit 200. When a thermal event such as venting gas or flame occurs in the battery module 100, the fire extinguishing liquid may be injected into the battery module 100.

For example, when it is assumed that an event occurs in the first battery sub-module M1, the fire extinguishing liquid may be ejected from the fire extinguishing tank unit 200, and in this case, the fire extinguishing liquid may be injected into the module case of the first battery sub-module M1 through the water injection hole G1 formed in an upper end of the first battery sub-module M1. In this case, propagation of thermal runaway or a fire of battery cells due to heat or venting gas may be prevented.

The fire extinguishing liquid injected into the first battery sub-module M1, for example, drops along a path as marked by an arrow in FIG. 8, reaches the bottom plate 113 of the module case, passes through the first drain hole 131, and drops again downward from the first battery sub-module M1.

Next, as marked by an arrow in FIG. 9, the fire extinguishing liquid is collected on the bottom surface 120B of the module connect bottom cover 120, and is discharged downward from the battery module 100 through the 3_1^{th} drain hole 133a of the third drain hole 133 of the module connect bottom cover 120. Next, the fire extinguishing liquid discharged downward from the battery module 100 passes through the through-holes 412 of the shelf portion 411, drops into the contaminated water storage container 420, and is finally stored in the contaminated water storage container 420. Hence, because the contaminated fire extinguishing liquid does not indiscriminately leak out of the battery pack, contamination of a surrounding environment may be prevented.

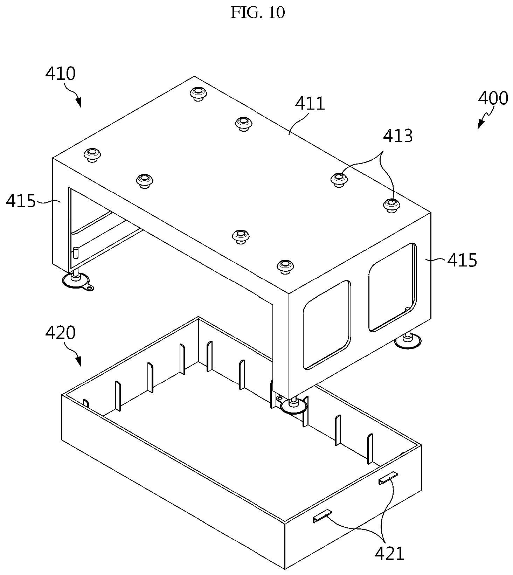

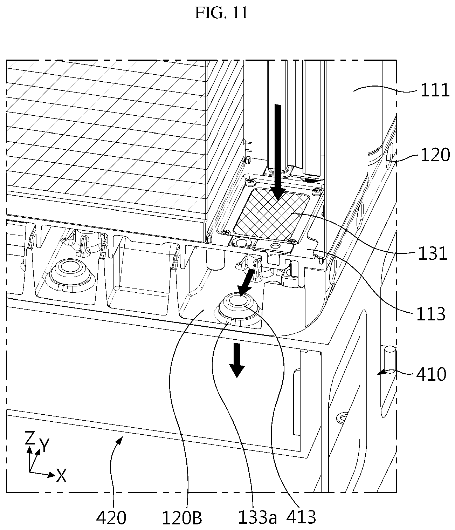

FIG. 10 is a view illustrating a modified example of the module supporter unit 400, corresponding to FIG. 6. FIG. 11 is a partial cut-away view illustrating the module supporter unit 400 and the battery module 100 of FIG. 10, corresponding to FIG. 9.

Next, a modified example of the module supporter unit 400 according to an embodiment of the present disclosure will be briefly described with reference to FIGS. 10 and 11.

The same members as those in the above embodiments are denoted by the same reference numerals, and thus, a repeated description thereof will be omitted and a difference from the above embodiments will be mainly described.

The module supporter unit 400 according to an embodiment of FIG. 10 is different from an embodiment of FIG. 6 in that the shelf portion 411 includes a module connection port 413 and a grating structure is omitted.

The module connection port 413 may protrude upward from the through-holes 412 vertically passing through the shelf portion 411. Also, the module connection port 413 may be forcibly fitted into the third drain hole 133 of the module connect bottom cover 120, as shown in FIG. 11. That is, the module connection port 413 may be forcibly fitted into the 3_1^{th} drain hole 133a or the 3_2^{th} drain hole 133b vertically corresponding to its position.

Also, as shown in FIG. 11, the module connection port 413 may include a head having a shape in which a diameter of a lower portion is greater than a diameter of an upper portion, and thus, the module connection port 413 may be easily inserted into the third drain hole 133 but may be difficult to be separated from the third drain hole 133. Preferably, the head of the module connection port 413 may be formed of an elastic material such as a rubber material.

As such, according to the embodiment of FIGS. 10 and 11, a contaminated fire extinguishing liquid may reach the contaminated water storage container 420 of the module supporter unit 400 from the inside of the battery module 100 without leaking at all. Also, because the module connection port 413 is forcibly fitted into the third drain hole 133 of the module connect bottom cover 120, the shelf portion 411 of the module supporter unit 400 and the battery module 100 may be mechanically connected to each other. Accordingly, the battery module 100 may be more stably mounted on the module supporter unit 400.

The fire extinguishing tank unit 200 according to the present disclosure may be configured to, in response to high-temperature gas or flame ejected through the water injection holes G1, G2, selectively supply a fire extinguishing liquid into at least one of the first battery sub-module M1 and the second battery sub-module M2 in which a thermal event occurs.

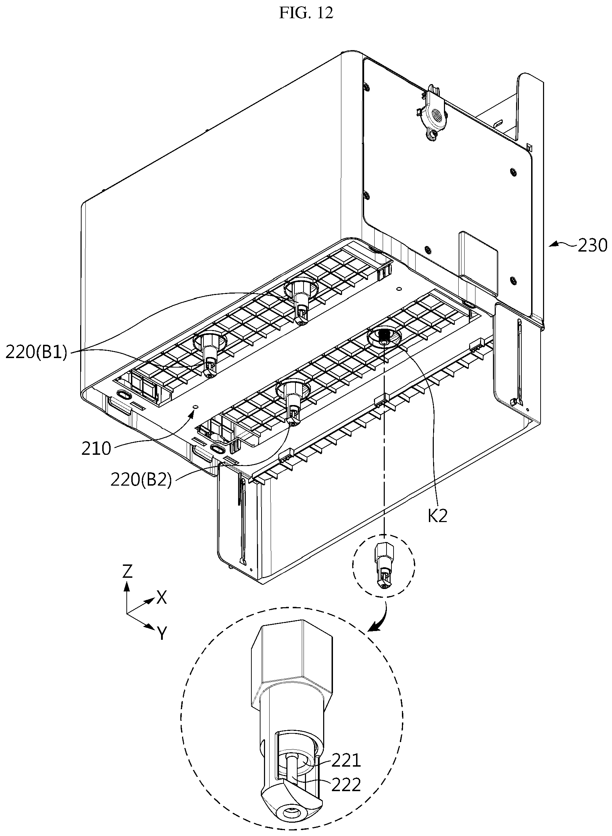

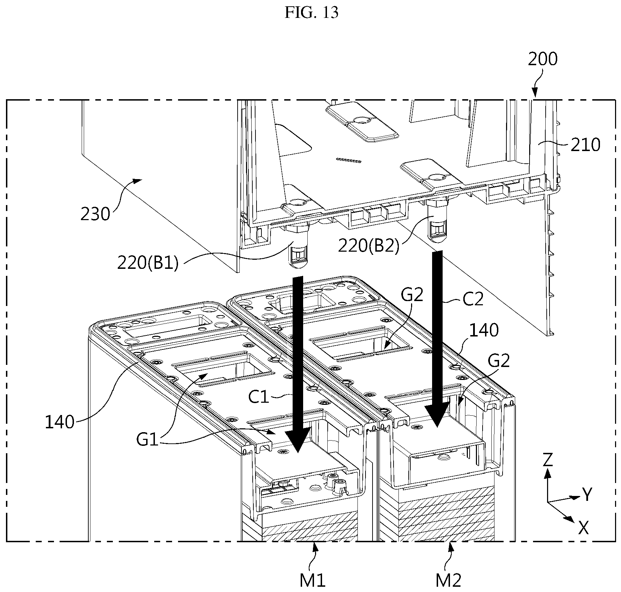

FIG. 12 is a perspective view schematically illustrating a lower portion of the fire extinguishing tank unit 200, according to an embodiment of the present disclosure. FIG. 13 is a partial cut-away view schematically illustrating a configuration in which a fire extinguishing liquid may be injected into the first and second battery sub-modules M1, M2 by the fire extinguishing tank unit 200, according to an embodiment of the present disclosure.

Referring to FIGS. 12 and 13, the fire extinguishing tank unit 200 may include a tank body 210, a plurality of ejection members 220, and a tank case for protecting the tank body 210 from the outside and more stably coupling the tank body 210 to an upper portion of the battery module 100. Hereinafter, the tank body 210 and the ejection member 220 which are main elements of the fire extinguishing tank unit 200 will be described in detail.

The tank body 210 may include a storage space in which a fire extinguishing agent may be accommodated, and may be provided in a box shape with a certain level of airtightness so that a liquid fire extinguishing agent, that is, a fire extinguishing liquid, is not injected into the battery module 100. For example, the tank body 210 may be provided to have airtightness performance of IP 55 or more. Also, the tank body 210 may include a fire extinguishing liquid inlet through which the fire extinguishing liquid may be supplied. The fire extinguishing liquid inlet may be provided on a top surface and/or a side surface of the tank body 210.

The plurality of ejection members 220 for spraying the fire extinguishing agent of the tank body 210 toward the battery module 100 may each have one side coupled to communicate with the inside of the tank body 210 and the other side protruding downward from the tank body 210.

For example, a connection port K2 may be provided on a lower portion of the tank body 210, as shown in FIG. 12. The connection port may have a screw thread on an outer circumferential surface. The ejection member 220 may be provided on the connection port to be screwed to or released from the connection port.

Also, the ejection member 220 may include a discharge port 221. For example, the discharge port 221 may be usually blocked, and then may be broken by heat or pressure to be opened. For example, as shown in FIG. 12, a glass bulb 222 may be mounted in the discharge port 221. The glass bulb 222 may be configured to be broken by high temperature or impact. For example, when the glass bulb 222 contacts venting gas discharged from the battery module 100, the glass bulb 222 may be broken by heat and pressure of the venting gas. Then, the discharge port 221 of the ejection member 220 may be opened, and thus, the fire extinguishing agent in the tank body 210 may be discharged to the outside of the tank body 210. As an alternative to the glass bulb 222, a plastic or vinyl material that may be melted by high temperature may be used.

When the fire extinguishing tank unit 200 is located on the battery modules 100, at least one of the ejection members 220 may be inserted into the water injection holes G1, G2 of the battery modules 100. That is, at least a portion of one ejection member 222 is inserted into each of the water injection hole G1 of the first battery sub-module M1 and the water injection hole G2 of the second battery sub-module M2.

In more detail, referring to FIG. 13, when the first battery sub-module M1 and the second battery sub-module M2 are arranged in a front-back direction (±Y direction), the fire extinguishing tank unit 200 located over the first and second battery sub-modules M1, M2 may include a first ejection member B1 and a second ejection member B2. The first ejection member B1 may be located over the first battery sub-module M1 to correspond to the first battery sub-module M1, and the second ejection member B2 may be located over the second battery sub-module M2 to correspond to the second battery sub-module M2.

In this embodiment, when a thermal event occurs in the first battery sub-module M1, the first ejection member B1 may be broken by venting gas or the like. Then, a fire extinguishing agent in the tank body 210 may be discharged from the first ejection member B1. Accordingly, as marked by an arrow C1 in FIG. 13, the fire extinguishing liquid may be injected only into the first battery sub-module M1 through the first ejection member B1, and may not be injected into the second battery sub-module M2.

In contrast, when a thermal event occurs in the second battery sub-module M2, the second ejection member B2 may be broken by venting gas or the like. Then, a fire extinguishing agent in the tank body 210 may be discharged from the second ejection member B2. Accordingly, as marked by an arrow C2 in FIG. 13, the fire extinguishing agent may be injected only into the second battery module 100 through the second ejection member B2, and may not be injected into the first battery sub-module M1.

According to this embodiment of the present disclosure, because a fire extinguishing agent may be injected into each battery sub-module, cooling, fire suppression, and thermal propagation prevention using the fire extinguishing agent may be done more effectively.

The battery pack according to an embodiment of the present disclosure may further include the control module 300 located on the fire extinguishing tank unit 200, as shown in FIGS. 1 and 2.

The control module 300 may control an overall operation of the battery pack. In particular, the control module 300 may be electrically connected to the battery module 100 and may be configured to control a charging operation or a discharging operation of the battery module 100. Also, the control module 300 may be configured to measure, calculate, receive, or control various electrical, physical, and chemical characteristics of the battery module 100, a battery cell included in the battery module 100, or a surrounding environment thereof. For example, the control module 300 may measure, calculate, or control a voltage, current, temperature, state of charge (SOC), state of health (SOH), and internal resistance of the battery cell or the battery module 100.

The control module 300 may receive operating power from the battery module 100 to manage the battery module 100. Also, the control module 300 may transmit and receive various data to and from the battery module 100 or an external device through a wired or wireless communication network.

The control module 300 may include various electronic components such as a battery management system (BMS), a relay, and a current sensor. Also, the control module 300 may include a control housing in which the electronic components are accommodated.

Also, the control module 300 may include a pack terminal. The pack terminal may be configured to connect the battery pack to an external charging/discharging device. For example, the pack terminal may include an outlet, or a plug, or a connector to be connected to a commercial power source or a load. Also, the control module 300 may include a power path through which charging power and discharging power is transmitted and received to and from the battery module 100. The power path may function as a path through which charging/discharging power is transmitted and received between the pack terminal and the battery module 100.

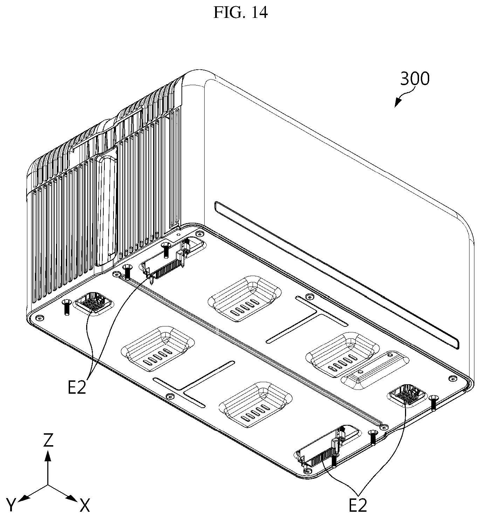

To this end, in the battery module 100, a module connector E1 for electrical connection may be provided at the top as shown in FIG. 2, and in the control module 300, a control connector E2 for electrical connection may be provided at the bottom as shown in FIG. 14. The fire extinguishing tank unit 200 may include a connection member. The connection member is an element for electrically connecting the battery module 100 to the control module 300. In particular, the connection member may be located between the module connector E1 provided on the battery module 100 and the control connector E2 provided on the control module 300 to connect the battery module 100 to the control module 300.

In a specific example, the connection member may be received in the fire extinguishing tank unit 200 as a cable that extends long in one direction and allows power or an electrical signal to move therethrough. The connection member may include a cable and tank connectors provided on both ends of the cable. For example, the connection member may include a first tank connector E32 located at an upper end of the fire extinguishing tank unit 200 in FIG. 2, and the first tank connector E32 may be connected in a plug-in manner to the control connector E2. Also, the connection member may include a second tank connector (not shown) located at a lower end of the first extinguishing tank unit 200, and the second tank connector may be connected in a plug-in manner to the module connector E1.

According to the embodiment, the control module 300 may be electrically connected to the battery module 100 only by seating on the fire extinguishing tank unit 200.

Also, it is easy to separate the fire extinguishing tank unit 200 between the battery module 100 and the control module 300. Accordingly, it is easy to replace, maintain, or repair the fire extinguishing tank unit 200 when necessary. Also, the fire extinguishing tank unit 200 may be omitted, and the control module 300 may be directly located on and electrically connected to the battery module 100.

An energy storage system (ESS) according to the present disclosure may include one or more battery packs according to the present disclosure. Also, the ESS according to the present disclosure may further include general elements included in an ESS, in addition to the battery packs. In particular, the ESS according to the present disclosure may be a residential ESS (for construction) used to store energy in a house or a building.

Also, it will be understood by one of ordinary skill in the art that when terms indicating directions such as upper, lower, front, and rear are used, these terms are only for convenience of explanation and may vary according to a position of a target object, a position of an observer, etc.

## Claims

1. A battery pack comprising:
a battery module (100) comprising a water injection hole (G1, G2) through which a fire extinguishing liquid can be supplied at an upper end portion and at least one drain hole (130) through which the fire extinguishing liquid can be discharged at a lower end portion;
a fire extinguishing tank unit (200) containing the fire extinguishing liquid, located over the battery module (100), and configured to supply the fire extinguishing liquid to the battery module (100) through the water injection hole (G1, G2); and
a module supporter unit (400) located under the battery module (100) and supporting the battery module (100) so that the battery module (100) is located at a certain height from a ground,
wherein the module supporter unit (400) comprises a contaminated water storage container (420) in which the fire extinguishing liquid dropping from the battery module (100) through the drain hole (130) is accommodated,
**characterized in that** the battery module comprises a first battery sub-module (M1) and a second battery sub-module (M2) each comprising the water injection hole (G1, G2),
wherein each of the first battery sub-module (M1) and the second battery sub-module (M2) is configured to individually receive the fire extinguishing liquid from the fire extinguishing tank unit (200) through the water injection hole (G1, G2).

2. The battery pack according to claim 1, wherein the battery module (100) comprises a module connect bottom cover (120) integrally covering a lower portion of the first battery sub-module (M1) and a lower portion of the second battery sub-module (M2).

3. The battery pack according to claim 2, wherein the drain hole (130) comprises:
a first drain hole (131) provided in a bottom surface of the first battery sub-module (M1);
a second drain hole (132) provided in a bottom surface of the second battery sub-module (M2); and
a third drain hole (133) provided in a bottom surface of the module connect bottom cover (120).

4. The battery pack according to claim 3, wherein the third drain hole (133) comprises: a 3_1^{th} drain hole (133a) located at a position corresponding to the bottom surface of the first battery sub-module (M1); and a 3_2^{th} drain hole (133b) located at a position corresponding to the bottom surface of the second battery sub-module (M2), in the bottom surface of the module connect bottom cover (120),
wherein the module connect bottom cover (120) comprises a blocking wall (122) that limits a movement path of the fire extinguishing liquid on the bottom surface of the module connect bottom cover (120), so that the fire extinguishing liquid dropping from the first drain hole (131) does not move to the 3_2^{th} drain hole (133b) and the fire extinguishing liquid dropping from the second drain hole (132) does not move to the 3_1^{th} drain hole (133a).

5. The battery pack according to claim 3, wherein the first drain hole (131) and the second drain hole (132) comprise a mesh filter.

6. The battery pack according to claim 1, wherein the module supporter unit (400) comprises a standing bracket (410) comprising one or more through-holes (412) communicating with the drain hole (130), a shelf portion (411) having a top surface on which the battery module (100) is seated, and a leg portion (415) supporting the shelf portion (411) to be spaced apart from the ground,
wherein the contaminated water storage container (420) is located under the shelf portion (411) to accommodate the fire extinguishing liquid dropping through the through-hole (412), and is detachably provided on the standing bracket (410).

7. The battery pack according to claim 6, wherein the shelf portion (411) has a grating structure.

8. The battery pack according to claim 6, wherein the shelf portion (411) comprises a module connection port (413) protruding upward from the one or more through-holes (412),
wherein the module connection port (413) is forcibly fitted into the drain hole (130) of the battery module (100).

9. The battery pack according to claim 1, wherein the fire extinguishing tank unit (200) is configured to, in response to high-temperature gas or flame ejected through the water injection hole (G1, G2), selectively supply the fire extinguishing liquid to at least one of the first battery sub-module (M1) and the second battery sub-module (M2) in which a thermal event occurs.

10. The battery pack according to claim 1, wherein the fire extinguishing tank unit (200) comprises: a tank body (210) provided to accommodate the fire extinguishing liquid; and a plurality of ejection members (220) having one side coupled to communicate with an inside of the tank body (210) and the other side protruding downward from the tank body (210),
wherein the plurality of ejection members (220) are located so that at least a portion of one ejection member (220) is inserted into each of the water injection hole (G1) of the first battery sub-module (M1) and the water injection hole (G2) of the second battery sub-module (M2), and are configured to be broken by high temperature or impact to eject the fire extinguishing liquid of the tank body (210).

11. The battery pack according to claim 10, wherein each of the plurality of ejection members (220) comprises any one of a glass bulb (222), a plastic material, and a vinyl material.

12. The battery pack according to claim 1, wherein each of the first battery sub-module (M1) and the second battery sub-module (M2) comprises:
a middle case (111) having a hollow structure to have an inner space in which battery cells are accommodated;
a top plate (112) comprising the water injection hole (G1, G2) and coupled to an upper end of the middle case (111); and
a bottom plate (113) comprising the drain hole (130) and coupled to a lower end of the middle case (111).

13. The battery pack according to claim 1, further comprising a control module (300) located on the fire extinguishing tank unit (200) and configured to control a charging operation or a discharging operation of battery cells included in the battery module (100).

14. An energy storage system comprising the battery pack according to any one of claims 1 to 13.

## Patentansprüche

1. Batteriepack, umfassend:
ein Batteriemodul (100), welches ein Wasser-Eingabeloch (G1, G2), durch welches eine Feuerlösch-Flüssigkeit zugeführt werden kann, an einem oberen Endabschnitt und wenigstens ein Abflussloch (130), durch welches die Feuerlösch-Flüssigkeit abgegeben werden kann, an einem unteren Endabschnitt umfasst;
eine Feuerlösch-Tankeinheit (200), welche die Feuerlösch-Flüssigkeit enthält, welche über dem Batteriemodul (100) angeordnet und dazu eingerichtet ist, die Feuerlösch-Flüssigkeit zu dem Batteriemodul (100) durch das Wasser-Eingabeloch (G1, G2) zuzuführen; und
eine Modul-Trägereinheit (400), welche unter dem Batteriemodul (100) angeordnet ist und das Batteriemodul (100) trägt, so dass das Batteriemodul (100) bei einer bestimmten Höhe von einem Untergrund angeordnet ist, wobei die Modul-Trägereinheit (400) einen Speicherbehälter für kontaminiertes Wasser (420) umfasst, in welchem die Feuerlösch-Flüssigkeit, welche aus dem Batteriemodul (100) durch das Abflussloch (130) tropft, aufgenommen wird,
**dadurch gekennzeichnet, dass** das Batteriemodul ein erstes Batterie-Untermodul (M1) und ein zweites Batterie-Untermodul (M2) umfasst, welche jeweils das Wasser-Eingabeloch (G1, G2) umfassen,
wobei jedes aus dem ersten Batterie-Untermodul (M1) und dem zweiten Batterie-Untermodul (M2) dazu eingerichtet ist, individuell die Feuerlösch-Flüssigkeit von der Feuerlösch-Tankeinheit (200) durch das Wasser-Eingabeloch (G1, G2) zu erhalten.

2. Batteriepack nach Anspruch 1, wobei das Batteriemodul (100) eine Modulverbindung-Bodenabdeckung (120) umfasst, welche integral einen unteren Abschnitt des ersten Batterie-Untermoduls (M1) und einen unteren Abschnitt des zweiten Batterie-Untermoduls (M2) abdeckt.

3. Batteriepack nach Anspruch 2, wobei das Abflussloch (130) umfasst:
ein erstes Abflussloch (131), welches in einer Bodenfläche des ersten Batterie-Untermoduls (M1) bereitgestellt ist;
ein zweites Abflussloch (132), welches in einer Bodenfläche des zweiten Batterie-Untermoduls (M2) bereitgestellt ist; und
ein drittes Abflussloch (133), welches in einer Bodenfläche der Modulverbindung-Bodenabdeckung (120) bereitgestellt ist.

4. Batteriepack nach Anspruch 3, wobei das dritte Abflussloch (133) umfasst:
ein 3_1tes Abflussloch (133a), welches an einer Position angeordnet ist, welche der Bodenfläche des ersten Batterie-Untermoduls (M1) entspricht; und ein 3_2tes Abflussloch (133b), welches an einer Position angeordnet ist, welche der Bodenfläche des zweiten Batterie-Untermoduls (M2) entspricht, in der Bodenfläche der Modulverbindung-Bodenabdeckung (120),
wobei die Modulverbindung-Bodenabdeckung (120) eine Blockierungswand (122) umfasst, welche einen Bewegungspfad der Feuerlösch-Flüssigkeit an der Bodenfläche der Modulverbindung-Bodenabdeckung (120) begrenzt, so dass sich die Feuerlösch-Flüssigkeit, welche von dem ersten Abflussloch (131) tropft, nicht zu dem 3_2ten Abflussloch (133b) bewegt, und sich die Feuerlösch-Flüssigkeit, welche von dem zweiten Abflussloch (132) tropft, nicht zu dem 3_1ten Abflussloch (133a) bewegt.

5. Batteriepack nach Anspruch 3, wobei das erste Abflussloch (131) und das zweite Abflussloch (132) einen Gewebefilter umfassen.

6. Batteriepack nach Anspruch 1, wobei die Modul-Trägereinheit (400) eine stehende Klammer (410), welche ein oder mehrere Durchgangslöcher (412) umfasst, welche mit dem Abflussloch (130) kommunizieren, einen Fachabschnitt (411), welcher eine obere Fläche aufweist, auf welcher das Batteriemodul (100) sitzt, und einen Beinabschnitt (415) umfasst, welcher den Fachabschnitt (411) so trägt, dass er von dem Untergrund beabstandet ist,
wobei der Speicherbehälter für kontaminiertes Wasser (420) unter dem Fachabschnitt (411) angeordnet ist, um die Feuerlösch-Flüssigkeit aufzunehmen, welche durch das Durchgangsloch (412) tropft, und lösbar an der stehenden Klammer (410) bereitgestellt ist.

7. Batteriepack nach Anspruch 6, wobei der Fachabschnitt (411) eine Gitterstruktur aufweist.

8. Batteriepack nach Anspruch 6, wobei der Fachabschnitt (411) einen Modul-Verbindungsanschluss (413) umfasst, welcher nach oben von dem einen oder den mehreren Durchgangslöchern (412) vorsteht,
wobei der Modul-Verbindungsanschluss (413) unter Krafteinsatz in das Abflussloch (130) des Batteriemoduls (100) eingepasst ist.

9. Batteriepack nach Anspruch 1, wobei die Feuerlösch-Tankeinheit (200) dazu eingerichtet ist, in Reaktion auf ein Hochtemperatur-Gas oder eine Flamme, welche/s durch das Wasser-Eingabeloch (G1, G2) ausgestoßen wird, selektiv die Feuerlösch-Flüssigkeit zu wenigstens einem aus dem ersten Batterie-Untermodul (M1) und dem zweiten Batterie-Untermodul (M2) zuzuführen, in welchem ein thermisches Ereignis auftritt.

10. Batteriepack nach Anspruch 1, wobei die Feuerlösch-Tankeinheit (200) umfasst: einen Tankkörper (210), welcher dazu bereitgestellt ist, die Feuerlösch-Flüssigkeit aufzunehmen; und eine Mehrzahl von Ausstoßelementen (220), welche eine Seite gekoppelt, um mit einer Innenseite des Tankkörpers (210) zu kommunizieren, und die andere Seite von dem Tankkörper (210) nach unten vorstehend aufweisen,
wobei die Mehrzahl von Ausstoßelementen (220) derart angeordnet sind, dass wenigstens ein Abschnitt von einem Ausstoßelement (220) in jedes aus dem Wasser-Eingabeloch (G1) des ersten Batterie-Untermoduls (M1) und dem Wasser-Eingabeloch (G2) des zweiten Batterie-Untermoduls (M2) eingesetzt ist, und dazu eingerichtet sind, durch eine hohe Temperatur oder einen Aufprall gebrochen zu werden, um die Feuerlösch-Flüssigkeit aus dem Tankkörper (210) auszustoßen.

11. Batteriepack nach Anspruch 10, wobei jedes aus der Mehrzahl von Ausstoßelementen (220) ein beliebiges aus einem Glaskolben (222), einem Kunststoffmaterial und einem Vinylmaterial umfasst.

12. Batteriepack nach Anspruch 1, wobei jedes aus dem ersten Batterie-Untermodul (M1) und dem zweiten Batterie-Untermodul (M2) umfasst:
ein mittleres Gehäuse (111), welches eine hohle Struktur aufweist, um einen Innenraum aufzuweisen, in welchem Batteriezellen aufgenommen sind;
eine obere Platte (112), welche das Wasser-Eingabeloch (G1, G2) umfasst und mit einem oberen Ende des mittleren Gehäuses (111) gekoppelt ist; und
eine Bodenplatte (113), welche das Abflussloch (130) umfasst und mit einem unteren Ende des mittleren Gehäuses (111) gekoppelt ist.

13. Batteriepack nach Anspruch 1, ferner umfassend ein Steuermodul (300), welches an der Feuerlösch-Tankeinheit (200) angeordnet und dazu eingerichtet ist, einen Ladebetrieb oder einen Entladebetrieb von Batteriezellen zu steuern, welche in dem Batteriemodul (100) umfasst sind.

14. Energie-Speichersystem, umfassend den Batteriepack nach einem der Ansprüche 1 bis 13.

## Revendications

1. Bloc-batterie comprenant :
un module de batterie (100) comprenant un trou d'injection d'eau (G1, G2) par lequel un liquide d'extinction d'incendie peut être fourni au niveau d'une partie d'extrémité supérieure et au moins un trou d'écoulement (130) par lequel le liquide d'extinction d'incendie peut être évacué au niveau d'une partie d'extrémité inférieure ;
une unité réservoir d'extinction d'incendie (200) contenant le liquide d'extinction d'incendie, située au-dessus du module de batterie (100), et configurée pour fournir le liquide d'extinction d'incendie au module de batterie (100) par l'intermédiaire du trou d'injection d'eau (G1, G2) ; et
une unité de support de module (400) située sous le module de batterie (100) et supportant le module de batterie (100) de façon à ce que le module de batterie (100) soit situé à une certaine hauteur par rapport à un sol,
dans lequel l'unité de support de module (400) comprend un récipient de stockage d'eau contaminée (420) dans lequel le liquide d'extinction d'incendie tombant du module de batterie (100) par le trou d'écoulement (130) est logé,
**caractérisé en ce que** le module de batterie comprend un premier sous-module de batterie (M1) et un second sous-module de batterie (M2) comprenant chacun le trou d'injection d'eau (G1, G2),
dans lequel chacun du premier sous-module de batterie (M1) et du second sous-module de batterie (M2) est configuré pour recevoir individuellement le liquide d'extinction d'incendie à partir de l'unité réservoir d'extinction d'incendie (200) par le trou d'injection d'eau (G1, G2).

2. Bloc-batterie selon la revendication 1, dans lequel le module de batterie (100) comprend un couvercle du dessous de liaison de module (120) couvrant intégralement une partie inférieure du premier sous-module de batterie (M1) et une partie inférieure du second sous-module de batterie (M2).

3. Bloc-batterie selon la revendication 2, dans lequel le trou d'écoulement (130) comprend :
un premier trou d'écoulement (131) prévu dans une surface du dessous du premier sous-module de batterie (M1) ;
un deuxième trou d'écoulement (132) prévu dans une surface du dessous du second sous-module de batterie (M2) ; et
un troisième trou d'écoulement (133) prévu dans une surface du dessous du couvercle du dessous de liaison de module (120).

4. Bloc-batterie selon la revendication 3, dans lequel le troisième trou d'écoulement (133) comprend : un 3_1e trou d'écoulement (133a) situé à une position correspondant à la surface du dessous du premier sous-module de batterie (M1) ; et un 3_2e trou d'écoulement (133b) situé à une position correspondant à la surface du dessous du second sous-module de batterie (M2), dans la surface du dessous du couvercle du dessous de liaison de module (120),
dans lequel le couvercle du dessous de liaison de module (120) comprend une paroi de blocage (122) qui limite un trajet de déplacement du liquide d'extinction d'incendie sur la surface du dessous du couvercle du dessous de liaison de module (120), de façon à ce que le liquide d'extinction d'incendie tombant du premier trou d'écoulement (131) ne se déplace pas vers le 3_2e trou d'écoulement (133b) et à ce que le liquide d'extinction d'incendie tombant du deuxième trou d'écoulement (132) ne se déplace pas vers le 3_1e trou d'écoulement (133a).

5. Bloc-batterie selon la revendication 3, dans lequel le premier trou d'écoulement (131) et le deuxième trou d'écoulement (132) comprennent un filtre à mailles.

6. Bloc-batterie selon la revendication 1, dans lequel l'unité de support de module (400) comprend un socle de maintien (410) comprenant un ou plusieurs trous traversants (412) communiquant avec le trou d'écoulement (130), une partie étagère (411) ayant une surface du dessus sur laquelle le module de batterie (100) est placé, et une partie pied (415) supportant la partie étagère (411) pour qu'elle soit espacée du sol,
dans lequel le récipient de stockage d'eau contaminée (420) est situé sous la partie étagère (411) pour loger le liquide d'extinction d'incendie tombant par le trou traversant (412), et est prévu de manière détachable sur le socle de maintien (410).

7. Bloc-batterie selon la revendication 6, dans lequel la partie étagère (411) a une structure de grille.

8. Bloc-batterie selon la revendication 6, dans lequel la partie étagère (411) comprend un orifice de liaison de module (413) faisant saillie vers le haut à partir des un ou plusieurs trous traversants (412),
dans lequel l'orifice de liaison de module (413) est ajusté de force dans le trou d'écoulement (130) du module de batterie (100).

9. Bloc-batterie selon la revendication 1, dans lequel l'unité réservoir d'extinction d'incendie (200) est configurée pour, en réponse à un gaz ou une flamme à haute température éjectés par le trou d'injection d'eau (G1, G2), fournir de manière sélective le liquide d'extinction d'incendie à au moins un parmi le premier sous-module de batterie (M1) et le second sous-module de batterie (M2) dans lequel un événement thermique se produit.

10. Bloc-batterie selon la revendication 1, dans lequel l'unité réservoir d'extinction d'incendie (200) comprend : un corps de réservoir (210) prévu pour loger le liquide d'extinction d'incendie ; et une pluralité d'éléments d'éjection (220) ayant un côté accouplé pour communiquer avec un intérieur du corps de réservoir (210) et l'autre côté faisant saillie vers le bas à partir du corps de réservoir (210),
dans lequel la pluralité d'éléments d'éjection (220) sont situés de façon à ce qu'au moins une partie d'un élément d'éjection (220) soit insérée dans chacun du trou d'injection d'eau (G1) du premier sous-module de batterie (M1) et du trou d'injection d'eau (G2) du second sous-module de batterie (M2), et sont configurés pour être cassés par une température élevée ou un impact pour éjecter le liquide d'extinction d'incendie du corps de réservoir (210).

11. Bloc-batterie selon la revendication 10, dans lequel chacun de la pluralité d'éléments d'éjection (220) comprend un quelconque parmi une ampoule en verre (222), une matière plastique et un matériau vinylique.

12. Bloc-batterie selon la revendication 1, dans lequel chacun du premier sous-module de batterie (M1) et du second sous-module de batterie (M2) comprend :
un boîtier intermédiaire (111) ayant une structure creuse pour avoir un espace intérieur dans lequel des éléments de batterie sont logés ;
une plaque du dessus (112) comprenant le trou d'injection d'eau (G1, G2) et accouplée à une extrémité supérieure du boîtier intermédiaire (111) ; et
une plaque du dessous (113) comprenant le trou d'écoulement (130) et accouplée à une extrémité inférieure du boîtier intermédiaire (111).

13. Bloc-batterie selon la revendication 1, comprenant en outre un module de commande (300) situé sur l'unité réservoir d'extinction d'incendie (200) et configuré pour commander une opération de charge ou une opération de décharge d'éléments de batterie compris dans le module de batterie (100).

14. Système de stockage d'énergie comprenant le bloc-batterie selon l'une quelconque des revendications 1 à 13.
